# EUROPÄISCHE PATENTSCHRIFT

(11) **EP 4 120 009 B1**
(45) Veröffentlichungstag und Bekanntmachung des Hinweises auf die Patenterteilung: **16.10.2024**
(21) Anmeldenummer: 22168817.9
(22) Anmeldetag: 19.04.2022
(51) Int. Cl.: G02F 1/1333

(54) **DISPLAYANORDNUNG**
DISPLAY ARRANGEMENT
ARRANGEMENT DE L'ÉCRAN

(30) Priorität: 15.07.2021 DE 102021118304
(43) Veröffentlichungstag der Anmeldung: 18.01.2023
(73) Patentinhaber: Marquardt GmbH, 78604 Rietheim-Weilheim (DE)
(72) Erfinder: LEIBER, Tobias, 78052 VS-Obereschach (DE); BÜHLER, Karl Heinz, 78669 Wellendingen (DE); MARK, Thorsten, 78554 Aldingen (DE)
(74) Vertreter: Staeger & Sperling Partnerschaftsgesellschaft mbB

(56) Entgegenhaltungen:
- DE-A1- 102011 005 379
- JP-A- 2017 026 887
- KR-A- 20190 075 435
- US-A1- 2010 197 187
- US-A1- 2011 304 812

## Beschreibung

Diese Erfindung betrifft ein Verfahren zum Bonding (allgemein Verbinden) einer Anzeigeeinrichtung, insbesondere zum Bonden einer Abdeckung oder eines Rahmens auf ein Display oder Anzeigesubstrat oder umgekehrt, und bezieht sich ferner auf eine durch das Verfahren zusammengebaute Anzeigeeinrichtung mit einem Display (auch Display-Baugruppe genannt) mit insbesondere einem Deckglas oder Kunststoff.

Im der Stand der Technik sind die Lösungen typischerweise auf das Verbinden von Substraten mit einem gleichen Abstand zwischen dem Rahmen und den weiteren Bauteilen beschränkt. Beispiele für solche Anwendungen sind in der Unterhaltungselektronik, wie Smartphones und Tablets, Zentraldisplays und Industriedisplays bekannt. Das Dokument WO 2014/061478 A1 offenbart ein mit einer Klebeschicht ausgestattetes transparentes Oberflächenmaterial, das zum Schützen eines Anzeigefelds und eines Displays, das dieses Oberflächenmaterial umfasst, geeignet ist.

Das Dokument JP 2009-93158 A beschreibt ein Display, wobei das Display eine Abdeckung mit Dekorationsschicht und eine Ausgleichsschicht umfasst. Diese Ausgleichsschicht beseitigt durch die Dicke der Dekorschicht auftretende Niveauunterschiede.

Die US2011/0304812 A1 offenbart ein Display mit einem Displaysubstrat, einer flachen Abdeckung und einer transparenten Füllschicht. Ein zwischen dem Displaysubstrat und der flachen Abdeckung angeordneter Damm wird dazu verwendet, um die flüssige transparente Füllschicht während des Herstellungsprozesses zu kontrollieren.

Das Dokument US 2015/0341272 A1 offenbart eine elektrooptische Anzeigeanordnung mit einer elektrooptischen Anzeige, einem Rahmen und einer transparenten Abdeckung, wobei eine Oberfläche der transparenten Abdeckung gekrümmt ist.

Das Dokument DE 10 2011005 379 A1 offenbart ein Verfahren zum Herstellen eines optoelektrischen Geräts und das Dokument US 2011/0187960 A1 offenbart eine Anzeigevorrichtung, die folgendes umfasst: ein Anzeigefeld und ein tafelähnliches Element, das mit einem Klebstoff aus einem ultraviolett-härtbaren Harz an die Anzeigetafel angebunden ist.

Aus der EP 3 218 766 B1 ist ferner eine verbesserte Lösung bekannt und zwar ein Display umfassend ein rechteckiges, im Wesentlichen flaches Display-Substrat und eine Abdeckung mit einer gekrümmten Fläche, wobei die gekrümmte Fläche durch ein Bonding-Material an dem flachen Display-Substrat geklebt ist, sowie einen rechteckförmigen Damm, der zwischen dem Display-Substrat und der Abdeckung angeordnetes Bonding-Material enthält, wobei das Display-Substrat, in einer Projektion auf eine parallel zu dem flachen Display-Substrat verlaufende Ebene betrachtet, entlang seinem Umfang von dem rechteckförmigen Damm allseitig beabstandet ist.

Nachteilig ist dabei, dass das Aufbringen eines Bonding-Materials auf die gekrümmte Fläche der Abdeckung zum Kleben der Abdeckung an das flache Display-Substrat zur Bildung des Displays und das korrekte Platzieren des Display-Substrats auf dem unausgehärteten Bonding-Material problematisch ist und bei ungenauem Ausrichten zu Fehlern führen kann. Ferner ist es nachteilig, wenn der Damm allseitig dazu verwendet wird, das Bonding-Material zwischen dem Display-Substrat und der Abdeckung gleichmäßig zu halten.

Weiterer druckschriftlicher Stand der Technik im vorliegenden technischen Gebiet ist in den Dokumenten KR 2019 075 435 A, US 2010/197 187 A1 und JP 2017 026 887 A offenbart.

Vor diesem Hintergrund liegt der vorliegenden Erfindung die technische Problemstellung zugrunde, eine verbesserte konzeptionelle Lösung und ein verbessertes Bonding bereit zu stellen, welches die vorbesagten Nachteile nicht aufweist.

Erfindungsgemäß wird hierzu eine Displayanordnung umfassend ein im Wesentlichen rechteckiges und flaches Display-Substrat und eine Abdeckung mit einem Verbindungsbereich an dem das Display-Substrat durch ein Bonding-Material bzw. Verbindungsmaterial geklebt ist, vorgeschlagen, wobei die Abdeckung einen rechteckförmigen Damm aufweist oder ausbildet, wobei das Display-Substrat in einer Projektion mit seinen Seitenkanten auf dem Damm in einer parallel zu dem Display-Substrat verlaufende Ebene betrachtet, und zwar entlang seinem Umfang kongruent mit einer Kante des rechteckförmigen Damms positioniert ist, so dass jeweils allseitig kein seitlicher Abstand zu dem Damm gebildet wird, sondern eine kongruente Superposition von dem Umfang des Display-Substrats mit der Kante des Damms gegeben ist.

In einer vorteilhaften Ausführungsform der Erfindung ist vorgesehen, dass das Display-Substrat vollständig mit allen Seitenkanten kongruent zu dem Damm ausgerichtet ist.

Erfindungsgemäß bildet die für das Display-Substrat ausgebildete Auflageseite des Damms ein Dach aus mit einem satteldachförmigen Querschnitt, deren First eine linienförmige Anlage bzw. Auflage für das Display-Substrat ausbildet. In einer nicht-erfindungsgemäßen alternativen Ausführungsform der Erfindung ist vorgesehen, dass die für das Display-Substrat ausgebildete Auflageseite des Damms ein kuppelförmiges Dach ausbildet, das vorzugsweise einen halbelipsenförmigen oder halbkreisförmigen Querschnitt besitzt, deren oberer dem Substrat zugewandter Stirnbereich (First) eine linienförmige Anlage für das Display-Substrat ausbildet. In einer weiteren nicht-erfindungsgemäßen Alternative besitzt die für das Display-Substrat ausgebildete Auflageseite des Damms eine Stufenform besitzt, mit einer Abstufung im Niveau zum Zentrum hin betrachtet. In einer weiteren bevorzugten Ausgestaltung der Erfindung ist vorgesehen, dass der Damm integral mit der Abdeckung ausgebildet ist.

In einer weiteren bevorzugten Ausgestaltung der Erfindung ist vorgesehen, dass der Damm teilweise oder vollständig eine Kante besitzt, die eine Fase ausbildet, die vorzugsweise einen Winkel schräg zur Projektionsebene besitzt.

Ein weiterer Aspekt der vorliegenden Erfindung betrifft neben der Displayanordnung als solcher auch ein Verfahren zur Herstellung einer wie zuvor beschriebenen Displayanordnung mit den folgenden Schritten:
a. Bereitstellen eines im Wesentlichen rechteckigen und flachen Display-Substrats und einer Abdeckung mit einem Verbindungsbereich an dem das Display-Substrat durch ein Bonding-Material bzw. ein Verbindungsmaterial angeklebt werden soll, wobei die Abdeckung einen rechteckförmigen Damm ausbildet mit einer Auflagefläche wie zuvor definiert;
b. Montieren des Display-Substrats derart an der Abdeckung, dass in einer Projektion auf eine parallel zu dem Display-Substrat verlaufende Ebene betrachtet, das Display-Substrat mit seinem von den Seitenkanten gebildeten Umfang kongruent mit einer Kante des Damms (12) in Superposition oberhalb des rechteckförmigen Damms auf diesem aufliegt und
c. Einfüllen mindestens eines Bonding-Materials in den Damm und vorzugsweise in die zur Klebung vorgesehenen Bereiche, um das Display-Substrat mit der Abdeckung zu klebend verbinden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine Ansicht einer Displayanordnung, die aus dem Stand der Technik bekannt ist;
- Fig. 2: eine Ansicht einer erfindungsgemäßen Displayanordnung;
- Fig. 3: Schnittansichten im Bereich des Damms und
- Fig. 4: eine beispielhaft angefasste Kante eines Damms.

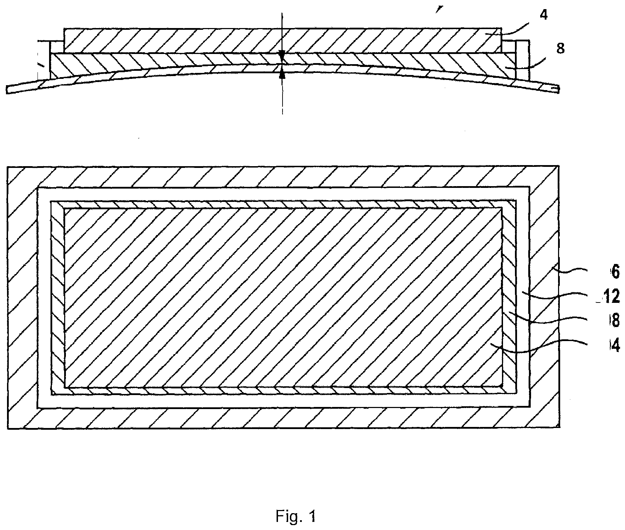

Im Folgenden wird die Erfindung anhand einer beispielhaften Ausführungsform mit Bezug auf die Figuren 1 bis 4 näher beschrieben, wobei gleiche Bezugszeichen in den Figuren auf gleiche funktionale und/oder strukturelle Merkmale hinweisen.

Die Figur 1 zeigt eine schematische Darstellung einer Lösung aus dem Stand der Technik und zwar eine Querschnittsseitenansicht eine Displayanordnung 1 mit einem LCD-Modul (oder Display-Substrat) 4 an einer Abdeckung 6 mit nicht ebener oder ungleichmäßiger Oberfläche unter Verwendung eines Verbindungsmaterials 8. Darunter zeigt die Fig. 1 auch eine Ansicht auf die Oberseite der Displayanordnung 1. Das bekannte Konzept besteht darin, mindestens einen Damm 12, der das Verbindungsmaterial 8 für das Bonden des Displaysubstrats 4 zu einer Abdeckung 6, die typischerweise aus Glas oder Kunststoff besteht zu halten, um unterschiedliche Dicken durch ungleichmäßige Abstände zwischen dem Anzeigesubstrat 4 und der Abdeckung 6 zu überbrücken. Im Beispiel von Fig. 1 ist das Verbindungsmaterial ein flüssiger Klebstoff aus einem Zweikomponenten-Silikon, das eine schnelle Aushärtungsfähigkeit bei Raumtemperatur hat und typischerweise innerhalb von wenigen Minuten aushärten kann. Im Stand der Technik ist dieser Damm 12 als ein massives Rechteck geformte Struktur, die auf der Abdeckung 6 angeordnet ist und eine ungleichmäßige Oberfläche besitzt, in diesem Fall gekrümmt. Das Klebematerial 8 hat demnach unterschiedliche Klebedicken auf der Abdeckung 6. Der Damm 12 fasst dabei das Verbindungsmaterial 8 zwischen dem Substrat 4 und der Abdeckung 6. Unter Bezugnahme auf die Aufsicht in der Figur 1 ist auch zu erkennen, dass das Display-Substrat 4 entlang seinem Umfang von dem rechteckförmigen Damm allseitig beabstandet ist und demnach auch zu den Rahmenkanten der Abdeckung 6 allseitig einen Abstand aufweist. Dies hat zur Folge, dass im Ergebnis auch allseitig ein Füllmaterial 8 bzw. Verbindungsmaterial 8 zwischen dem Substrat 4 und der Abdeckung 6 vorhanden ist.

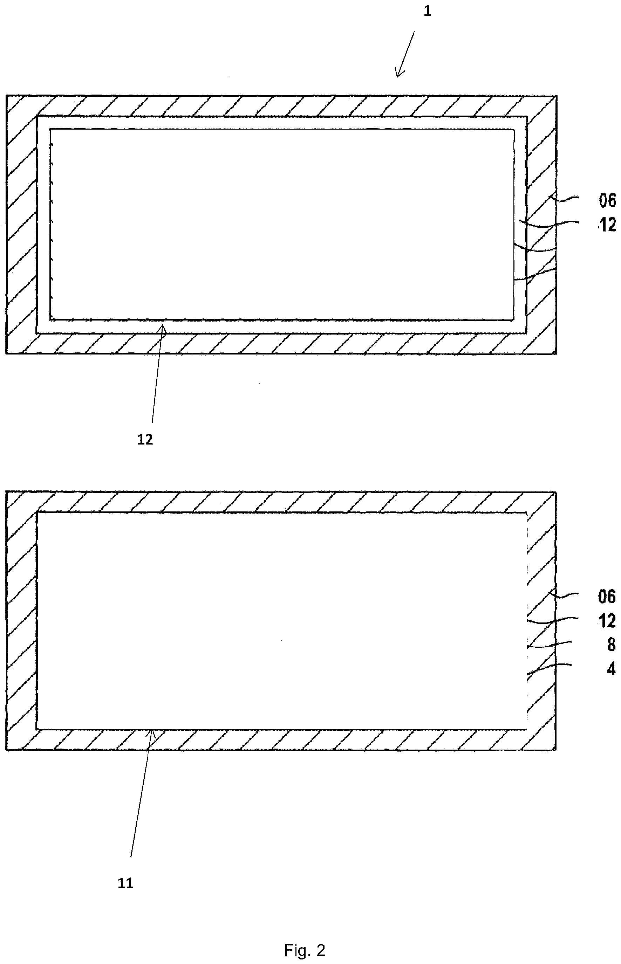

Das Problem des Positionierens und die damit einhergehenden Nachteile werden durch die erfindungsgemäße Lösung, wie diese im Ausführungsbeispiel nach Figur 2 gezeigt ist, beseitigt oder zumindest nennenswert verbessert.

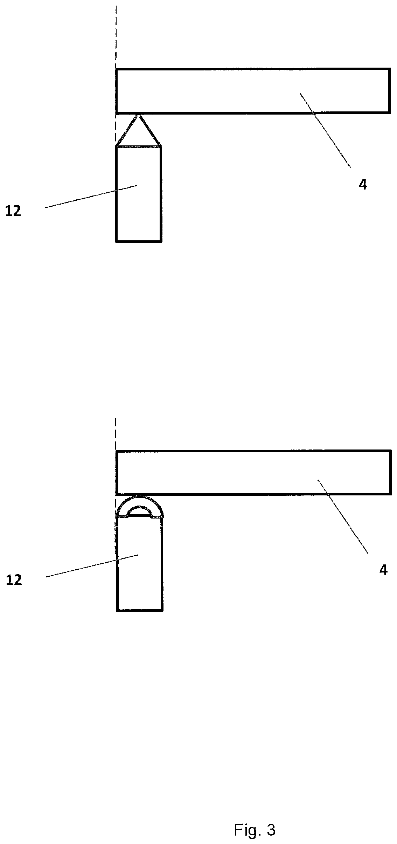

Die Figur 2 zeigt in der oberen Ansicht eine Displayanordnung 1 für ein ebenfalls rechteckiges, im Wesentlichen flaches Display-Substrat 4 und eine Abdeckung 6 mit einem Verbindungsbereich an dem das Display-Substrat 4 durch ein Bonding-Material 8 bzw. Verbindungsmaterial 8 geklebt wird, sowie einen rechteckförmigen Damm 12, der ein Bonding-Material enthält. Das Display-Substrat 4 ist in der unteren Abbildung der Fig. 2 auf dem Damm 12 aufgebracht und in einer Projektion mit seinen Seitenkanten 11 auf dem Damm 12 (wie in der Figur 3 im Detail gezeigt) in einer parallel zu dem Display-Substrat 4 verlaufende Ebene betrachtet, und zwar entlang seinem Umfang kongruent mit der Kante des rechteckförmigen Damms 12 positioniert, so dass jeweils allseitig kein seitlicher Abstand zu dem Damm 12 gebildet wird, sondern eine kongruente Superposition von dem Umfang des Display-Substrats 4 mit der Kante des Damms 12 gegeben ist.

Das Display-Substrat 4 liegt vollständig auf dem Damm 12 auf. Diese hat eine spezifische Auflagefläche mit einer im Wesentlichen linienförmigen Auflage.

In der Figur 3 sind im Querschnitt Ausschnitte von zwei beispielhaften Formen des Damms 12 gezeigt bis zu dessen Kante (gezeigt durch die Strichlinie) das Display-Substrat 4 verläuft. In der oberen Ansicht der Figur 3 ist ein satteldachförmiger Querschnitt gezeigt, der unter die beanspruchte Erfindung fällt, mit einem First, der eine linienförmige Auflage für das Display-Substrat 4 bildet. In der unteren Ansicht der Figur 3 ist ein halbkreisförmiger Dachquerschnitt gezeigt, der nicht unter die beanspruchte Erfindung fällt, mit einem First, der ebenfalls eine nahezu linienförmige Auflage für das Display-Substrat 4 bildet.

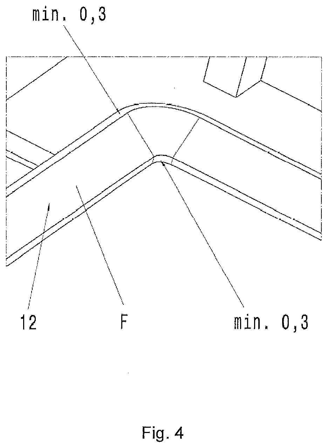

Der Damm 12 kann integral mit der Abdeckung 6 ausgebildet sein und wie in der Figur 4 gezeigt eine Fase aufweisen. Das bedeutet, dass der Damm 12 zumindest teilweise oder bevorzugt vollständig eine solche Kante besitzt, die eine Fase F ausbildet, die einen wie in der Abbildung gezeigten schrägen Winkel zur Projektionsebene besitzt und eine Restbreite sowie eine Resthöhe am jeweiligen Auslauf der Fase von wenigstens 0,3 mm bildet.

Die Erfindung beschränkt sich in ihrer Ausführung nicht auf die vorstehend angegebenen bevorzugten Ausführungsbeispiele sondern wird durch die beigefügten Ansprüche definiert.

Vielmehr ist eine Anzahl von Varianten denkbar, welche von der dargestellten Lösung auch bei grundsätzlich anders gearteten Ausführungen Gebrauch macht. So können z. B. auch andere Formen der Abstandhalter als die erwähnten verwendet werden, um das Display-Substrat 4 in Position zu bringen und dort zu fixieren.

## Patentansprüche

1. Displayanordnung (1) mit einem im Wesentlichen rechteckigen und flachen Display-Substrat (4) und einer Abdeckung (6) mit einem Verbindungsbereich an dem das Display-Substrat (4) durch ein Bonding-Material (8) bzw. ein Verbindungsmaterial (8) klebend befestigt ist, sowie einen rechteckförmigen Damm (12), der das Bonding-Material enthält, wobei das Display-Substrat (4) in einer Projektion mit seinen Seitenkanten (11) auf dem Damm (12) in einer parallel zu dem Display-Substrat (4) verlaufende Ebene betrachtet, und zwar entlang seinem Umfang kongruent mit einer Kante des rechteckförmigen Damms (12) positioniert ist, so dass jeweils allseitig kein seitlicher Abstand zu dem Damm (12) gebildet wird, sondern eine kongruente Superposition von dem Umfang des Display-Substrats (4) mit der Kante des Damms (12) gegeben ist, **dadurch gekennzeichnet, dass** die für das Display-Substrat (4) ausgebildete Auflageseite des Damms (12) ein Dach ausbildet mit einem satteldachförmigen Querschnitt, deren First eine linienförmige Anlage für das Display-Substrat (4) ausbildet.

2. Displayanordnung (1) nach Anspruch 1, **dadurch gekennzeichnet, dass** das Display-Substrat (4) vollständig mit allen Seitenkanten (11) kongruent zu dem Damm (12) ausgerichtet ist.

3. Displayanordnung (1) nach einem der vorhergehenden Ansprüche, **dadurch gekennzeichnet, dass** der Damm (12) integral mit der Abdeckung (6) ausgebildet ist.

4. Displayanordnung (1) nach einem der vorhergehenden Ansprüche, **dadurch gekennzeichnet, dass** der Damm (12) teilweise oder vollständig eine Kante besitzt, die eine Fase ausbildet, die vorzugsweise einen Winkel schräg zur Projektionsebene besitzt.

5. Verfahren zur Herstellung einer Displayanordnung (1) nach einem der vorhergehenden Ansprüche umfassend die folgenden Schritte:
a. Bereitstellen eines im Wesentlichen rechteckigen und flachen Display-Substrats (4) und einer Abdeckung (6) mit einem Verbindungsbereich an dem das Display-Substrat (4) durch ein Bonding-Material (8) bzw. ein Verbindungsmaterial (8) angeklebt werden soll, wobei die Abdeckung (6) einen rechteckförmigen Damm (12) ausbildet mit einer Auflagefläche wie in einem der vorhergehenden Ansprüche definiert;
b. Montieren des Display-Substrats (4) derart an der Abdeckung (6), dass in einer Projektion auf eine parallel zu dem Display-Substrat (4) verlaufende Ebene betrachtet, das Display-Substrat (4) mit seinem von den Seitenkanten (11) gebildeten Umfang kongruent mit einer Kante des Damms (12) in Superposition oberhalb des rechteckförmigen Damms (12) auf diesem aufliegt und
c. Einfüllen mindestens eines Bonding-Materials in den Damm (12) und vorzugsweise in die zur Klebung vorgesehenen Bereiche, um das Display-Substrat (4) mit der Abdeckung (6) klebend zu verbinden.

## Claims

1. A display arrangement (1) with a substantially rectangular and flat display substrate (4) and a cover (6) with a connecting region to which the display substrate (4) is adhesively attached by a bonding material (8) or a connecting material (8), and a rectangular dam (12) which contains the bonding material, wherein the display substrate (4) is viewed in a projection with its side edges (11) on the dam (12) in a plane extending parallel to the display substrate (4) and is positioned along its periphery congruently with an edge of the rectangular dam (12), so that no lateral spacing from the dam (12) is formed on all sides, but rather a congruent superposition of the periphery of the display substrate (4) with the edge of the dam (12) is produced, **characterized in that** the support side of the dam (12) designed for the display substrate (4) forms a roof with a gable roof-shaped cross section whose ridge forms a linear system for the display substrate (4).

2. The display arrangement (1) according to claim 1, **characterized in that** the display substrate (4) is completely aligned with all side edges (11) congruently to the dam (12).

3. The display arrangement (1) according to any one of the preceding claims, **characterized in that** the dam (12) is formed integrally with the cover (6).

4. The display arrangement (1) according to any one of the preceding claims, **characterized in that** the dam (12) partially or completely possesses an edge which forms a bevel preferably having an angle oblique to the projection plane.

5. A method for manufacturing a display arrangement (1) according to any one of the preceding claims, comprising the following steps:
a. providing a substantially rectangular and flat display substrate (4) and a cover (6) with a connecting region to which the display substrate (4) is to be adhered by a bonding material (8) or a connecting material (8), the cover (6) forming a rectangular dam (12) with a support surface as defined in any one of the preceding claims;
b. mounting the display substrate (4) on the cover (6) in such a way that, when viewed in a projection onto a plane extending parallel to the display substrate (4), the display substrate (4) rests with its periphery formed by the side edges (11) congruently with an edge of the dam (12) in superposition above the rectangular dam (12) on the latter, and
c. filling at least one bonding material into the dam (12) and preferably into regions that are intended for bonding in order to adhesively join the display substrate (4) to the cover (6).

## Revendications

1. Agencement d'affichage (1), comprenant un substrat d'affichage (4) substantiellement rectangulaire et plat, et un recouvrement (6) pourvu d'une zone de liaison à laquelle le substrat d'affichage (4) est fixé par encollage à l'aide d'un matériau de collage (8) ou d'un matériau de liaison (8), ainsi qu'une bordure rectangulaire (12) qui contient le matériau de collage, dans lequel, vu en projection avec ses bords latéraux (11) sur la bordure (12) dans un plan s'étendant en parallèle au substrat d'affichage (4), c'est-à-dire le long de sa circonférence, le substrat d'affichage (4) est positionné de manière congruente avec un bord de la bordure rectangulaire (12), de sorte que respectivement sur tous les côtés, aucun écartement latéral ne se forme par rapport à la bordure (12) mais qu'une superposition congruente de la circonférence du substrat d'affichage (4) avec le bord de la bordure (12) soit donnée, **caractérisé en ce que** la face d'appui de la bordure (12), réalisée pour le substrat d'affichage (4), réalise un toit ayant une section transversale en forme de toit à pignon dont le faîte réalise un appui linéaire pour le substrat d'affichage (4).

2. Agencement d'affichage (1) selon la revendication 1, **caractérisé en ce que** le substrat d'affichage (4) est aligné entièrement avec tous les bords latéraux (11) de manière congruente par rapport à la bordure (12).

3. Agencement d'affichage (1) selon l'une quelconque des revendications précédentes, **caractérisé en ce que** la bordure (12) est réalisée d'un seul tenant avec le recouvrement (6).

4. Agencement d'affichage (1) selon l'une quelconque des revendications précédentes, **caractérisé en ce que** la bordure (12) possède partiellement ou entièrement un bord réalisant un chanfrein qui possède de préférence un angle oblique par rapport au plan de projection.

5. Procédé permettant de fabriquer un agencement d'affichage (1) selon l'une quelconque des revendications précédentes, comprenant les étapes suivantes consistant à :
a) fournir un substrat d'affichage (4) substantiellement rectangulaire et plat et un recouvrement (6) pourvu d'une zone de liaison à laquelle le substrat d'affichage (4) doit être collé par un matériau de collage (8) ou un matériau de liaison (8), dans lequel le recouvrement (6) réalise une bordure rectangulaire (12) pourvue d'une surface d'appui, selon l'une quelconque des revendications précédentes ;
b) monter le substrat d'affichage (4) sur le recouvrement (6) de telle sorte que vu dans une projection sur un plan s'étendant en parallèle au substrat d'affichage (4), le substrat d'affichage repose avec sa circonférence formée par les bords latéraux (11) de manière congruente avec un bord de la bordure (12) en superposition sur celui-ci au-dessus de la bordure rectangulaire (12) ; et
c) verser au moins un matériau de collage dans la bordure (12) et de préférence dans les zones prévues pour le collage afin de relier par encollage le substrat d'affichage (4) au recouvrement (6).
